# EUROPÄISCHE PATENTSCHRIFT

(11) **EP 4 070 000 B1**
(45) Veröffentlichungstag und Bekanntmachung des Hinweises auf die Patenterteilung: **06.09.2023**
(21) Anmeldenummer: 21765864.0
(22) Anmeldetag: 17.08.2021
(51) Int. Cl.: E21D 9/10, F16J 15/3216, F16J 15/322, F16J 15/3232, F16J 15/3204, F16J 15/3268

(54) **DICHTUNGSEINHEIT ZUM ABDICHTEN EINES RINGSPALTS UM EINE ANTRIEBSWELLE FÜR EIN SCHNEIDRAD EINER TUNNELBOHRMASCHINE UND TUNNELBOHRMASCHINE**
SEALING UNIT FOR SEALING AN ANNULAR GAP AROUND A DRIVE SHAFT FOR A CUTTING WHEEL OF A TUNNEL BORING MACHINE, AND TUNNEL BORING MACHINE
UNITÉ D'ÉTANCHÉITÉ DESTINÉE À ASSURER L'ÉTANCHÉITÉ D'UN ESPACE ANNULAIRE AUTOUR D'UN ARBRE D'ENTRAÎNEMENT DESTINÉ À UNE ROUE DE COUPE D'UN TUNNELIER, ET TUNNELIER

(30) Priorität: 19.08.2020 DE 202020104813 U
(43) Veröffentlichungstag der Anmeldung: 12.10.2022
(73) Patentinhaber: HERRENKNECHT AKTIENGESELLSCHAFT, 77963 Schwanau (DE)
(72) Erfinder: BURGER, Werner, 77963 Schwanau (DE); WEHRMEYER, Gerhard, 77963 Schwanau (DE); ISELE, Dietmar, 79365 Rheinhausen (DE); WEBER, Felix, 77749 Hohberg (DE)
(74) Vertreter: RACKETTE Patentanwälte PartG mbB
(86) Internationale Anmeldenummer: PCT/EP2021/072829
(87) Internationale Veröffentlichungsnummer: WO 2022/038132

(56) Entgegenhaltungen:
- CN-A- 101 280 847
- DE-A1-102016 208 085
- KR-A- 20010 109 702
- KR-B1- 100 390 706
- US-A- 3 625 523
- US-A- 4 844 255
- US-A1- 2012 098 209
- US-A1- 2016 059 950

## Beschreibung

Die Erfindung betrifft eine Tunnelbohrmaschine mit Dichtungseinheiten zum Abdichten eines Ringspalts um eine Antriebswelle für ein Schneidrad.

Aus CN 101 280 847 A ist eine Tunnelbohrmaschine mit einer Anzahl von Dichtungseinheiten zum Abdichten eines Ringspalts um die Antriebswelle für das Schneidrad bekannt. Die Dichtungsringe liegen in halbseitig offenen Dichtungsringhaltern. In verbauter Anordnung der Dichtungseinheiten werden die Fixierbereiche der Dichtungsringe zum einen durch zwei innenseitige Anlageflächen des Dichtungsringhalters, in den der Dichtungsring eingelegt ist, sowie durch eine den Fixierbereich untergreifende Ringnase eines benachbarten Dichtungsringhalters in Betriebsstellung fixiert.

Aus US 2012/0098209 A1 ist eine Dichtungseinheit bekannt, die zur Einzelverwendung vorgesehen ist. Die Dichtungseinheit verfügt über einen zweiteiligen U-artig mit nach radial innen einkragenden Endabschnitten ausgebildeten Dichtungsringhalter, in dem ein Fixierbereich eines Dichtungsrings angeordnet ist. Der Dichtungsring verfügt über eine Vielzahl von nach radial innen vorstehenden Dichtlippen mit verschiedenen radialen Erstreckungen zur Verwendung mit gestuften Wellen.

Aus DE 10 2016 208 058 A1 ist eine Stützringanordnung für Lager von Eisenbahnwagenachsen bekannt, bei der ein L-artig ausgebildeter Dichtungsringhalter einen Dichtungsring aufnimmt und mittels einer Federnase fixiert.

Aus US-A-4,844,255 ist eine Kühlwasserpumpendichtung für einen Verbrennungsmotor bekannt, bei der einer gleitend an der Welle anliegenden Hauptdichtung kühlwasserseitig eine Schutzdichtung vorgeschaltet ist. Die Schutzdichtung besteht aus einem Filtervlies und ist an dem die Hauptdichtung tragenden Gehäuse befestigt.

Aus KR 2001 0109702 A ist eine Dichtungseinheit mit einem U-artig ausgebildeten Dichtungsringhalter bekannt, in dessen Aufnahmebereich eine Anzahl von Dichtungsringscheiben mit zwischenliegenden Abstandshaltern angeordnet ist.

Aus US 2016/0059950 A1 ist eine Dichtungsanordnung für ein Wasserfahrzeug bekannt, die über eine Anzahl von Dichtungsringhaltern verfügt, zwischen denen Dichtungsringe angeordnet sind. Ein Fixierbereich der Dichtungsringe liegt mit einer Flachseite an einem Dichtungsringhalter an und wird auf der dieser Flachseite gegenüberliegenden anderen Seite von einer Ringnase eines benachbarten Dichtungsringhalters untergriffen.

Aus dem Fachartikel "Difficult Ground Solutions (DGS): New TBM Solutions carve a Path to Success" von D. Harding, Proceedings of the World Tunnel Congress 2017 - Surface challenges - Underground solutions, Bergen, Norwegen, ist eine Dichteinheit mit einem Dichtungsringhalter aus einem biegesteifen Material und mit einem Dichtungsring aus einem biegeelastischen Material bekannt, bei der der Dichtungsring in einer halbseitig offenen Ausnehmung des Dichtungsringhalters angeordnet ist. Die endgültige Fixierung des Dichtungsrings durch Reibschluss erfolgt in verbauter Anordnung durch einen auf der der offenen Seite des Dichtungsringhalters benachbart angeordneten Dichtungsringhalter einer weiteren Dichtungseinheit.

Aus EP 2 325 530 B1 ein Dichtungsringhalter mit einem U-artigen Aufnahmebereich zum rein reibschlüssigen Fixieren eines Dichtungsrings bekannt.

Der Erfindung liegt die Aufgabe zugrunde, eine mit einer Anzahl von Dichtungseinheiten zum Abdichten eines Ringspalts um eine Antriebswelle für ein Schneidrad ausgestattete Tunnelbohrmaschine anzugeben, die sich durch eine betriebssichere Handhabung beim Verbau der Dichtungseinheiten auszeichnet.

Diese Aufgabe wird durch eine Tunnelbohrmaschine mit den Merkmalen des Anspruchs 1 gelöst.

Dadurch, dass bei erfindungsgemäßen Dichtungseinheiten der Dichtungsring im Fixierbereich von dem Dichtungsringhalter radial und axial außenseitig umschlossen ist, lässt sich jede dieser Dichtungseinheiten verlässlich und insbesondere ohne Gefahr eines Verkippens des Dichtungsrings in den Ringspalt einführen.

Bei einer bevorzugten Ausführungsform erfolgt das Fixieren des Dichtungsrings in dem Dichtungsringhalter formschlüssig und reibschlüssig. Dadurch ist ein definierter Formschluss und Reibschluss bereits in Form montierten Dichtungseinheiten durch ein Einklippsen gegeben. Diese Kombination aus Formschluss und Reibschluss ist ab der Vormontage eines Dichtungsrings vorhanden und bleibt im Betrieb erhalten.

Weitere zweckmäßige Ausgestaltungen der Erfindung sind Gegenstand der abhängigen Ansprüche.

Weitere zweckmäßige Ausgestaltungen und Vorteile der Erfindung ergeben sich aus der nachfolgenden Beschreibung von Ausführungsbeispielen mit Bezug auf die Figuren der Zeichnung.

Es zeigen:
- Fig. 1: in einer Schnittansicht einen Bereich um eine Antriebswelle einer Tunnelbohrmaschine mit einer Anzahl von Dichtungseinheiten gemäß einem Ausführungsbeispiel,
- Fig. 2: in einer gegenüber der Darstellung gemäß Fig. 1 detaillierteren Schnittansicht eine Anzahl von Dichtungseinheiten gemäß dem in Fig. 1 dargestellten Ausführungsbeispiel,
- Fig. 3 bis Fig. 9: verschiedene Ausführungen von wechselweise formschlüssig ineinandergreifenden Strukturen, die an Dichtungsringhaltern und Dichtungsringen in verschiedenen Ausführungen ausgebildet sind, und
- Fig. 10: in einer Schnittansicht entsprechend Fig. 1 eine Anzahl von Dichtungseinheiten gemäß einem Ausführungsbeispiel bei Beginn eines Montagevorganges.
- Fig. 11: in einer Schnittansicht eine Weiterbildung einer Dichtungseinheit,
- Fig. 12: in einer Schnittansicht eine Anzahl von Dichtungseinheiten gemäß der in Fig. 11 dargestellten Weiterbildung in einer Anordnung gemäß Fig. 2 in einer abgewandelten Montageanordnung,
- Fig. 13: in einer Schnittansicht einen Zwischenzustand bei einer Montage von einzelnen Dichtungseinheiten mittels einer Anzahl von Blockmontagebolzen,
- Fig. 14: in einer Schnittansicht eine Endmontageanordnung von Dichtungseinheiten, die mit Einzelbefestigungsschrauben und Blockmontagebolzen gehalten sind,
- Fig. 15: in einer Schnittansicht einen Block von vor einer Endmontage miteinander verbundenen Dichtungseinheiten vor Aufschieben auf Blockmontagebolzen,
- Fig. 16: in einer Schnittansicht zwei Dichtungseinheiten in einer Zwischenmontageanordnung sowie ein Niederhalterwerkzeug zum Durchführen einer Druckprüfung,
- Fig. 17: in einer Schnittansicht eine Anzahl von fertig montierten Dichteinheiten und ein Abdrückwerkzeug zum Durchführen einer Druckprüfung sowie
- Fig. 18 und Fig. 19: eine Weiterbildung eines Dichtungsrings mit einer innenliegenden Ringhohlkammer in einem druckfreien und in einem druckbeaufschlagten Zustand.

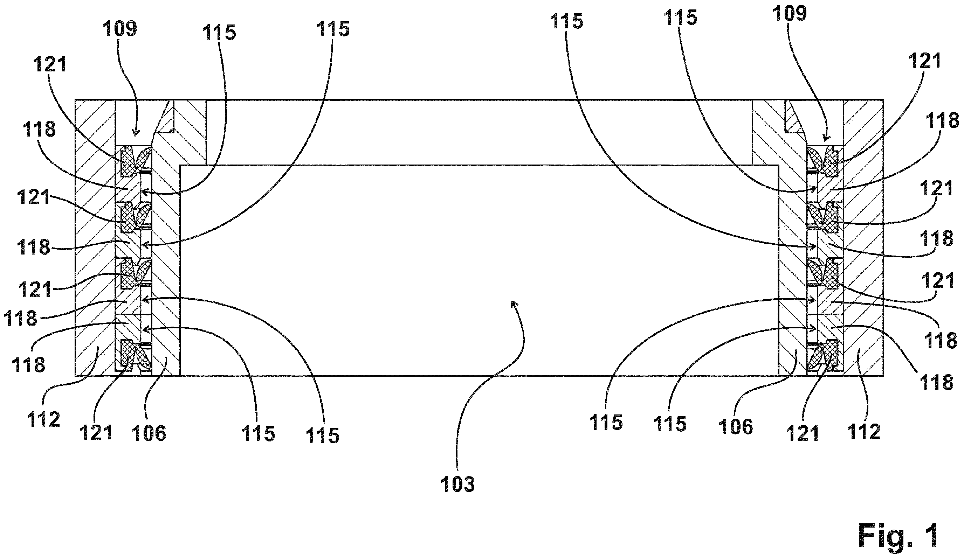

Fig. 1 zeigt in einer Schnittansicht einen Bereich um eine Antriebswelle 103 für ein in Fig. 1 nicht dargestelltes Schneidrad einer Tunnelbohrmaschine. Radial außenseitig der Antriebswelle 103 ist ein Dichtungslaufring 106 vorhanden, der radial außenseitig unter Ausbilden eines sich in einer axialen Richtung von axial innen, in der Darstellung gemäß Fig. 1 rechts, nach axial außen, in der Darstellung gemäß Fig. 1 links, erstreckenden Ringspalts 109 von einem Dichtungsträger 112 umgeben ist.

Weiterhin sind in Fig. 1 eine Anzahl von Dichtungseinheiten 115 gemäß einem Ausführungsbeispiel dargestellt, die nach Durchführen eines weiter unten näher erläuterten Montagevorganges in axialer Richtung aneinander anliegend in dem Ringspalt 109 angeordnet sind.

Jede Dichtungseinheit 115 verfügt als wesentliche Komponenten über einen bei der in Fig. 1 dargestellten Ausführung einteiligen Dichtungsringhalter 118, der in einem Aufnahmebereich U-artig ausgebildet ist, und über einen Dichtungsring 121 aus einem weichelastischen Material, der, wie weiter unten anhand verschiedener Ausführungen erläutert, vor allem während des Montagevorgangs, aber auch im bestimmungsgemäßen Einsatz, durch den zugehörigen Dichtungsringhalter 118 allein verkippsicher durch eine Kombination von Reibschluss und Formschluss fixiert ist.

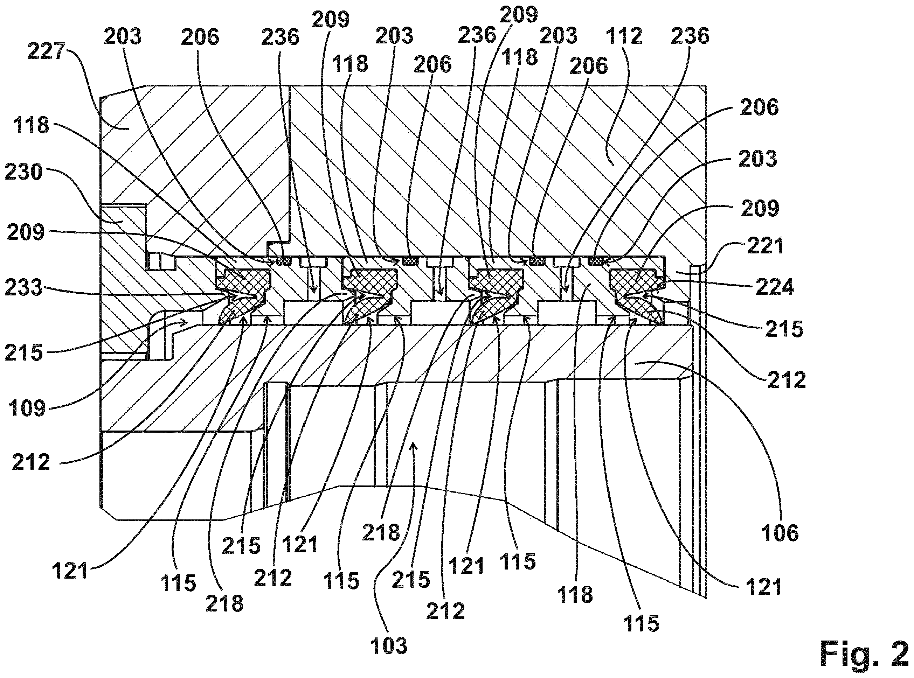

Fig. 2 zeigt in einer gegenüber der Darstellung gemäß Fig. 1 vergrößerten Schnittansicht das Ausführungsbeispiel der Dichtungseinheit 115 gemäß Fig. 1, wobei die Schnittebenen in Fig. 1 und in Fig. 2 verschieden gelegt sind. Aus Fig. 2 ist ersichtlich, dass bei dem hier dargestellten Ausführungsbeispiel die Dichtungsringhalter 118 radial außenseitig über eine Aufnahmenut 203 verfügen, in die eine ringförmig ausgebildete Außendichtung 206 aus einem weichelastischen Material mit einem in der Verbausituation die Aufnahmenut 203 ausfüllenden Querschnitt ausgebildet ist. Durch die Außendichtungen 206 ist die Abfolge von Dichtungseinheiten 115 radial außenseitig gegen den Dichtungsträger 112 verlässlich abgedichtet.

Weiterhin lässt sich der Darstellung gemäß Fig. 2 entnehmen, dass die Dichtungsringe 121 mit einem verhältnismäßig massigen Fixierbereich 209 und mit einer Dichtlippe 212 ausgebildet sind, wobei die Dichtlippe 212 zweckmäßigerweise mit dem Fixierbereich 209 über einen Gelenkbereich 215 verbunden ist, der eine gegenüber der Dichtlippe 212 verringerte Materialdicke aufweist.

Der Fixierbereich 209 jedes Dichtungsrings 121 ist in dem U-artig ausgebildeten Aufnahmebereich des Dichtungsringhalters 118 angeordnet, während die Dichtlippe 212 zweckmäßigerweise mit einer gewissen Vorspannung in radialer Richtung an der radialen Außenseite des Dichtungslaufrings 106 anliegt.

Zweckmäßigerweise weisen die in axialer Richtung innen liegenden Dichtungsringhalter 118 auf der dem durch sie gehaltenen Dichtungsring 121 abgewandten Seite eine nach axial innenseitig überstehende Gegennase 218 auf, die bei einer bestimmungsgemäßen Anordnung in einem Ringspalt 109, wie in Fig. 2 dargestellt, den Fixierbereich 209 eines benachbarten Dichtungsrings 121 untergreift und diesen Dichtungsring 121 einer anderen Dichtungseinheit 115 zusätzlich fixiert.

Der Darstellung gemäß Fig. 2 lässt sich weiterhin entnehmen, dass der Dichtungsträger 112 auf seiner in axialer Richtung innen liegenden Seite einen nach radial innen einkragenden Anschlagring 221 aufweist, der für die während des Montagevorgangs zuerst eingeführte Dichtungseinheit 115, in der Darstellung gemäß Fig. 2 die am weitesten rechts liegende Dichtungseinheit 115, einen axialen Anschlag bildet. An dem Anschlagring 221 ist eine Hintergriffnase 224 ausgebildet, die den Fixierbereich 209 des an dem Anschlagring 221 anliegenden Dichtungsrings 121 entsprechend den Gegennasen 218 zur zusätzlichen Fixierung untergreift.

Auf der dem Anschlagring 221 gegenüberliegenden Seite sind in der Darstellung gemäß Fig. 2 ein Abschlussring 227 mit einem radial innen liegenden Verschlussring 230 dargestellt, der den Ringspalt 109 unter Fixieren der in den Ringspalt 109 eingefügten Dichtungseinheiten 115 axial verschließt. An dem Verschlussring 230 ist ebenfalls eine Hintergriffnase 233 ausgebildet, die den Fixierbereich 209 des an dem Verschlussring 230 anliegenden Dichtungsrings 121 zur zusätzlichen Fixierung untergreift.

Des Weiteren lässt sich der Darstellung gemäß Fig. 2 entnehmen, dass in den Dichtungsringhaltern 118 jeweils eine sich in radialer Richtung erstreckende Durchlassanordnung 236 ausgebildet ist, die in Abhängigkeit ihrer endgültigen Position nach Abschluss des Montagevorgangs zum Versorgen einer Kammer mit zugeführtem Fett oder entsprechenden Medien bei einer Anordnung in der Darstellung gemäß Fig. 2 auf der linken Seite, einer Kammer für Öl oder entsprechenden Medien zum Schmieren der Dichtlippen 212 bei der Anordnung in der Darstellung gemäß Fig. 2 in der Mitte und schließlich einer Kammer zur Aufnahme von Schmutz und Medienresten aus den anderen Kammern im Fall einer Leckage beim Anordnen auf der in der Darstellung gemäß Fig. 2 rechten Seite.

Die Durchlassanordnungen 236 dienen, wie weiter unten näher erläutert, auch der Zufuhr eines unter Druck stehenden Fluids wie beispielsweise Druckluft zum Durchführen von Druckprüfungen wie einem Überprüfen des Schließdrucks und/oder Öffnungsdrucks.

Aus der Darstellung gemäß Fig. 2 lässt sich erkennen, dass in verbauter Anordnung der Dichtungseinheiten 115 der Kraftfluss zwischen dem Dichtungsträger 112 und dem Verschlussring 230 über die in axialer Richtung aneinander anliegenden Dichtungsringhalter 118 erfolgt, so dass aufgrund der weitgehend frei von Reibungsverlusten erfolgenden Verschiebbarkeit der Dichtungsringhalter 118 in axialer Richtung eine gleichmäßige Verteilung der Vorspannkräfte über die Dichtungsringhalter 118 erfolgt. Weiterhin nimmt jeder Dichtungsringhalter 118 die auf den von ihm gehaltenen Dichtungsring 121 ausgeübten Belastungen auf, so dass die Dichtungsringe 121 in ihrem Fixierbereich 209 verhältnismäßig wenig belastet sind.

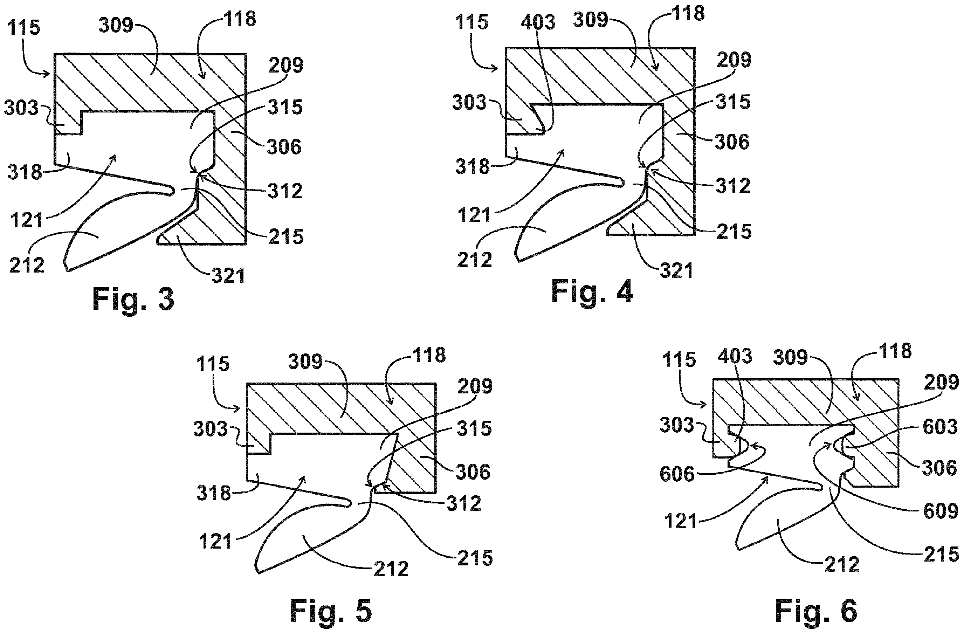

Fig. 3 zeigt das Ausführungsbeispiel einer Dichtungseinheit 115 gemäß Fig. 1 und Fig. 2 im Bereich des U-artig ausgebildeten Aufnahmebereichs des Dichtungsringhalters 118. Der Aufnahmebereich ist bei dem Ausführungsbeispiel gemäß Fig. 3 durch eine kurze Seitenwand 303 und eine lange Seitenwand 306, die einander gegenüber liegen, sowie durch eine Deckwand 309 gebildet, die sich zwischen radial außenseitig liegenden Enden der Seitenwände 303, 306 erstreckt. An der langen Seitenwand 306 ist in einem axialen Abstand von der Deckwand 309 eine in axialer Richtung vorstehende Schulter 312 ausgebildet, die in eine hierzu komplementär in dem Fixierbereich 209 des Dichtungsrings 121 ausgebildete Mulde 315 eingreift. Die Schulter 312 und die Mulde 315 sind Bestandteile von an dem Dichtungsringhalter 118 und dem Fixierbereich 209 wechselweise formschlüssig ineinander greifenden Strukturen.

Weitere derartige Strukturen sind durch das radial innenseitig vorstehende Ende der kurzen Seitenwand 303 und einen an diesem Ende anliegenden Abschlussring 318 des Fixierbereichs 209 ausgebildet.

Zum besonders verlässlichen Fixieren des Fixierbereichs 209 in dem Dichtungsringhalter 118 ist es zweckmäßig, dass der Fixierbereich 209 gegenüber den Dimensionen des Aufnahmebereichs im relaxierten Zustand ein gewisses Übermaß aufweist, so dass bei Einfügen des Fixierbereichs 209 in den Aufnahmebereich eine gewisse, die Fixierung verbessernde Vorspannung in dem Fixierbereich 209 vorhanden ist.

Weiterhin lässt sich der Darstellung gemäß Fig. 3 entnehmen, dass an dem von der Deckwand 309 abgewandten Ende der langen Seitenwand 303 eine in axialer Richtung über die Schulter 312 überstehende Anschlagnase 321 ausgebildet ist, an der die Dichtlippe 212 im Falle einer Druckbeaufschlagung des zwischen dem Fixierbereich 209 und der Dichtlippe 212 ausgebildeten Volumens anliegt.

Fig. 4 zeigt in einer Schnittansicht ein weiteres Ausführungsbeispiel einer Dichtungseinheit 115, wobei sich bei dem anhand Fig. 3 erläuterten Ausführungsbeispiel und bei dem Ausführungsbeispiel gemäß Fig. 4 einander entsprechende Elemente mit den gleichen Bezugszeichen versehen und im Weiteren nicht näher erläutert sind. Das Ausführungsbeispiel gemäß Fig. 4 weist, abweichend von dem Ausführungsbeispiel gemäß Fig. 3, an der kurzen Seitenwand 303 eine in axialer Richtung in Richtung der langen Seitenwand 306 vorstehende Hintergriffnase 403 auf, die unter Ausbilden einer entsprechenden Struktur mit dem Fixierbereich 209 formschlüssig in Eingriff kommt. Dadurch ist die Fixierung des Fixierbereichs 209 weiter verbessert.

Fig. 5 zeigt an der Schnittansicht ein weiteres Ausführungsbeispiel einer Dichtungseinheit 115, wobei bei dem Ausführungsbeispiel gemäß Fig. 3 und bei dem Ausführungsbeispiel gemäß Fig. 5 einander entsprechende Elemente mit den gleichen Bezugszeichen versehen und im Weiteren nicht näher erläutert sind. Das Ausführungsbeispiel gemäß Fig. 5 weicht bezüglich des Aufnahmebereichs und des Fixierbereichs 209 von dem Ausführungsbeispiel gemäß Fig. 3 dahingehend ab, dass die lange Seitenwand 306 in Richtung der Deckwand 309 unter Ausbilden eines spitzen Winkels zwischen der Innenseite der Seitenwand 306 und der Innenseite der Deckwand 309 angeschrägt ist, wobei der Fixierbereich 209 des Ausführungsbeispiels gemäß Fig. 5 den Aufnahmebereich formschlüssig ausfüllt. Dadurch ist der Schutz vor einem unbeabsichtigten Verkippen des Fixierbereichs 209 des Dichtungsrings 121 aus dem Aufnahmebereich verbessert.

Fig. 6 zeigt in einer Schnittansicht ein weiteres Ausführungsbeispiel einer Dichtungseinheit 115, wobei sich bei den voranstehend erläuterten Ausführungsbeispielen und dem Ausführungsbeispiel gemäß Fig. 6 einander entsprechende Elemente mit den gleichen Bezugszeichen versehen und im Weiteren nicht näher erläutert sind.

Bei dem Ausführungsbeispiel gemäß Fig. 6 weist auch die lange Seitenwand 306 eine Hintergriffnase 603 auf, die einer an der kurzen Seitenwand 303 ausgebildeten Hintergriffnase 403 gegenüberliegt. Die Hintergriffnasen 403, 603 greifen in in dem Fixierbereich 209 des Dichtungsrings 121 ausgebildete Nasennuten 606, 609 ein. Durch die so ausgebildeten, wechselweise formschlüssig ineinander greifenden Strukturen von Hintergriffnasen 403, 603 und Nasennuten 606, 609 ist der Fixierbereich 209 des Dichtungsrings 121 sehr stabil in dem Aufnahmebereich des Dichtungsringhalters 118 fixiert.

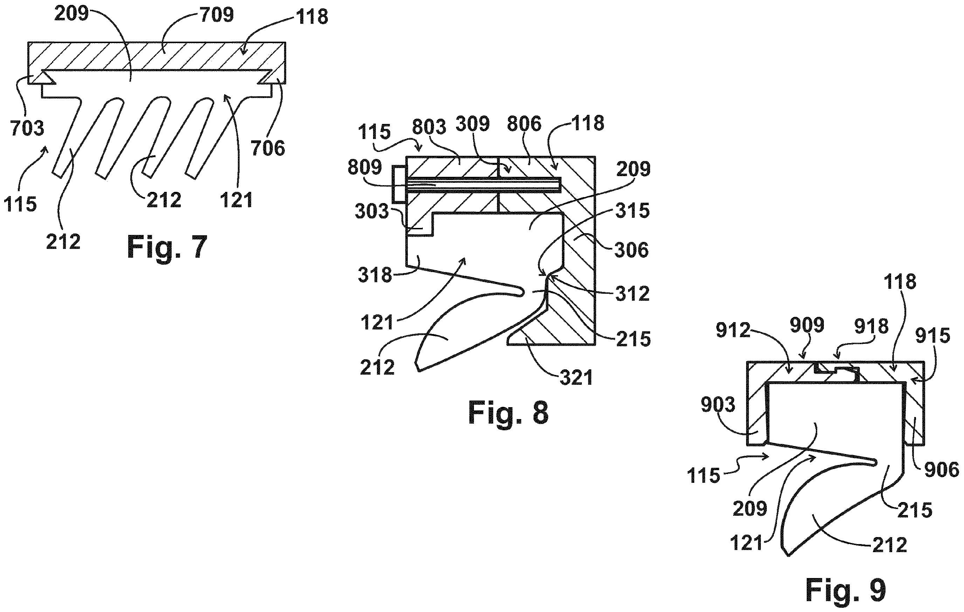

Fig. 7 zeigt in einer Schnittansicht ein weiteres Ausführungsbeispiel einer Dichtungseinheit 115, die mit einem Dichtungsringhalter 118 und mit einem mehrere Dichtlippen 212 aufweisenden Dichtungsring 121 ausgebildet ist, wobei sich bei den voranstehend erläuterten Ausführungsbeispielen und bei dem Ausführungsbeispiel gemäß Fig. 7 einander entsprechende Elemente mit den gleichen Bezugszeichen versehen und im Weiteren nicht näher erläutert sind. Der Dichtungsringhalter 118 des Ausführungsbeispiels gemäß Fig. 7 verfügt über zwei verhältnismäßig kurze Seitenwände 703, 706, die radial außenseitig über eine Deckwand 709 miteinander verbunden sind. Die Seitenwände 703, 706 weisen an ihren der Deckwand 709 abgewandten Enden aufeinander zu weisende krallenartige Vorsprünge auf, die in dem Fixierbereich 209 des Dichtungsrings 121 ausbildeten Krallennuten eingreifen. Durch das Ausbilden des Dichtungsrings 121 mit einer Anzahl von Dichtlippen 212, die in axialer Richtung nur im Abstand voneinander angeordnet sind, ergibt sich trotz einer verhältnismäßig hohen Steifigkeit der Dichtlippen 212 im Übergangsbereich zu dem Fixierbereich 209 eine gute Abdichtung. Die Dichtlippen 212 erstrecken sich in Richtung ihrer freien Enden verjüngend schräg von dem Fixierbereich 209 weg.

Fig. 8 zeigt in einer Schnittansicht ein weiteres Ausführungsbeispiel einer Dichtungseinheit 115, wobei sich bei dem Ausführungsbeispiel gemäß Fig. 3 und bei dem Ausführungsbeispiel gemäß Fig. 8 einander entsprechende Elemente mit den gleichen Bezugszeichen versehen und im Weiteren nicht näher erläutert sind. Das Ausführungsbeispiel gemäß Fig. 8 weicht von dem Ausführungsbeispiel gemäß Fig. 3 dahingehend ab, dass der Dichtungsringhalter 118 zweiteilig mit einem ersten Dichtungsringhalterteil 803 und mit einem zweiten Dichtungsringhalterteil 806 ausgebildet ist. Die Dichtungsringhalterteile 803, 806 bilden in zusammengefügter Anordnung die Deckwand 309 aus und sind in diesem Bereich über Schraubverbindungen 809 als Verbindungsmittel lösbar fest miteinander verbunden. Dadurch lässt sich bei noch nicht ganz fest angezogenen Schraubverbindungen 809 der Fixierbereich 209 des Dichtungsrings 121 in den Aufnahmebereich des Dichtungsringhalters 118 einlegen und durch Anziehen der Schraubverbindungen 809 abschließend fixieren. Diese Ausführung kommt zweckmäßigerweise dann zum Einsatz, wenn der Fixierbereich 209 gegenüber dem Aufnahmebereich ein Übermaß aufweist.

Fig. 9 zeigt in einer Schnittansicht ein weiteres Ausführungsbeispiel einer Dichtungseinheit 115, bei dem der zwei gleich lange Seitenwände 903, 906 und eine die Seitenwände 903, 906 an ihren radial außenseitigen Enden verbindende Deckwand 909 aufgebaute Dichtungsringhalter 118 zweiteilig mit einem ersten Dichtungsringhalterteil 912 und mit einem zweiten Dichtungsringhalterteil 915 ausgebildet ist. Die Dichtungsringhalterteile 912, 915 sind an ihren aufeinander zuweisenden Deckwandteilabschnitten mit einer formschlüssig ineinander greifenden Rastverbindung 918 als Verbindungsmittel ausgebildet, wobei in einer relaxierten Anordnung der Rastverbindung 918 die Seitenwände 903, 906 nach radial innen aufeinander zu laufen, so dass bei Einfügen des im Querschnitt im Wesentlichen quaderförmig ausgebildeten Fixierbereichs 209 in den Aufnahmebereich die Rastverbindung 918 unter Vorspannung gerät und bis zum Aufheben der Vorspannung unlösbar verrastet ist.

Die Kombination aus einem Fixieren sowohl über Reibschluss als auch über Formschluss in dem U-artigen Aufnahmebereich des Dichtungsringhalters 118 hat insbesondere, jedoch nicht ausschließlich, einen Vorteil im Betrieb insbesondere bei dynamisch pulsierenden Drücken in einer Abbaukammer einer Tunnelvortriebsmaschine. Diese Art der Fixierung wird bevorzugt eingesetzt, um die Herstellungskosten gering zu halten und einen reduzierten Montageaufwand sowie Demontageaufwand bereitzustellen. Darüber hinaus ist ein Austauschen, ein Warten und eine Reparatur einer Dichtungseinheit 115 beziehungsweise eines Verbundes von Dichtungseinheiten 115, wie weiter unten näher erläutert, mit einem üblichen Aufwand durchzuführen.

Bei einer nicht dargestellten Ausführung erfolgte die Fixierung eines Dichtungsrings 121 in einem Dichtungsringhalter 118 durch Stoffschluss. Ein derartiger Stoffschluss lässt sich beispielsweise durch Einkleben eines Dichtungsrings 121 in einen Dichtungsringhalter 118 oder durch Vulkanisieren eines Dichtungsrings 121 in einen aus Metall hergestellten Dichtungsringhalter 118 ausführen. Ein derartiges Fixieren durch Stoffschluss ist insbesondere bei dauerhaften hochfrequenten Vibrationen im Betrieb einer Tunnelbohrmaschine zweckmäßig, um unter Inkaufnahme eines relativ gesehen höheren Reparaturaufwands ein Verkippen von Dichtungsringen 121 im Betrieb verhältnismäßig zuverlässig zu vermeiden.

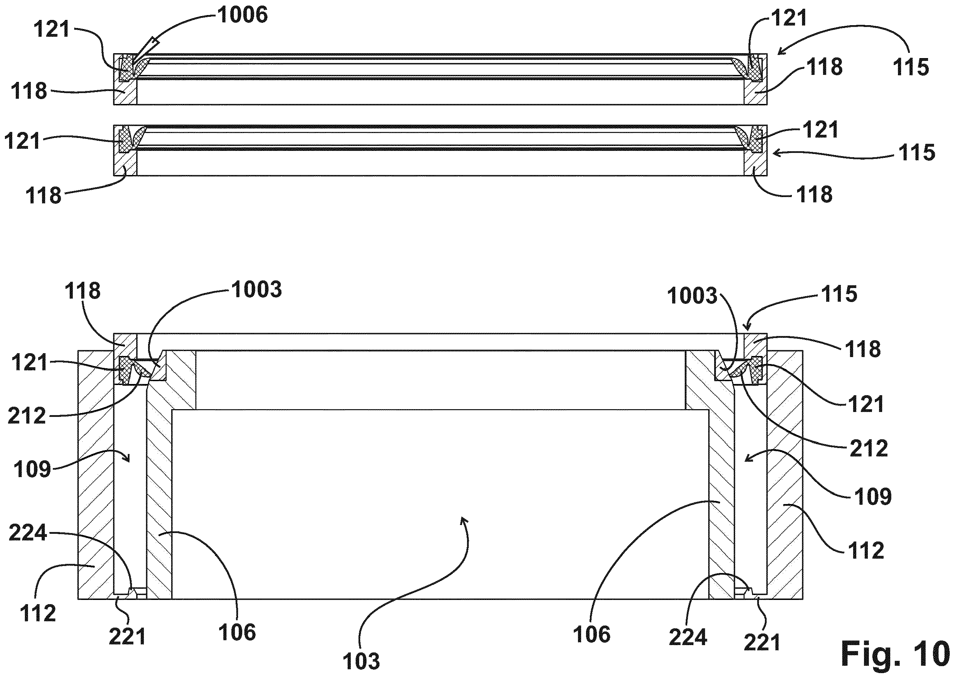

Fig. 10 zeigt in einer Schnittansicht entsprechend Fig. 1 die Anordnung aus Dichtungslaufring 106 und dem Dichtungsträger 112 mit dazwischen ausgebildetem Ringspalt 109 zu Beginn eines Montagevorgangs von Dichtungseinheiten 115. In der Darstellung gemäß Fig. 10 ist auf einer keilartig erweiterten Einführseite des Ringspalts 109 eine Dichtungseinheit 115 angeordnet, deren noch verhältnismäßig steil angestellte Dichtlippe 212 an einer keilartig, sich in Einführrichtung nach radial außen verdickenden Einführhilfe 1003 anliegt. Bei einem weiteren Einführen dieser bereits abschnittsweise zwischen dem Dichtungslaufring 106 und dem Dichtungsträger 112 dargestellten Dichtungseinheit 115 gleitet die Dichtlippe 212 weiter auf der Einführhilfe 1003 auf, bis sie an der radialen Außenseite des Dichtungslaufrings 106 anliegt. Dabei gleitet die radiale Außenseite des Dichtungsringhalters 118 an der radialen Innenseite des Dichtungsträgers 112 entlang, so dass die radiale Außenseite des Dichtungsrings 121 durch den Dichtungsringhalter 118 geschützt und damit berührungsfrei mit dem Dichtungsträger 112 ist.

Die in Fig. 10 mit einem bereits abschnittsweisen Eintritt in den Ringspalt 109 dargestellte Dichtungseinheit 115 ist dabei so angeordnet, dass die Dichtlippe 212 in Einschieberichtung nach vorne weist, wobei der Einschiebevorgang beendet ist, sobald die Dichtungseinheit 115 an dem mit der Hintergriffnase 224 zum Hintergreifen des Fixierbereichs 209 des Dichtungsrings 121 ausgebildeten Anschlagring 221 anschlägt. Anschließend erfolgt das Einführen von weiteren Dichtungseinheiten 115 nach Einfügen des Fixierbereichs 209 des Dichtungsrings 121 in den Aufnahmebereich des Dichtungsringhalters 118 gegebenenfalls mit einem in der Darstellung gemäß Fig. 10 sehr schematisch dargestellten Montagewerkzeug 1006 in den Ringspalt 109, wobei diese weiteren Dichtungseinheiten 115 so angeordnet sind, dass die betreffende Dichtlippe 212 in Einführrichtung rückseitig angeordnet ist.

Nach Abschluss des Montagevorgangs liegt dann die Anordnung gemäß Fig. 1 vor.

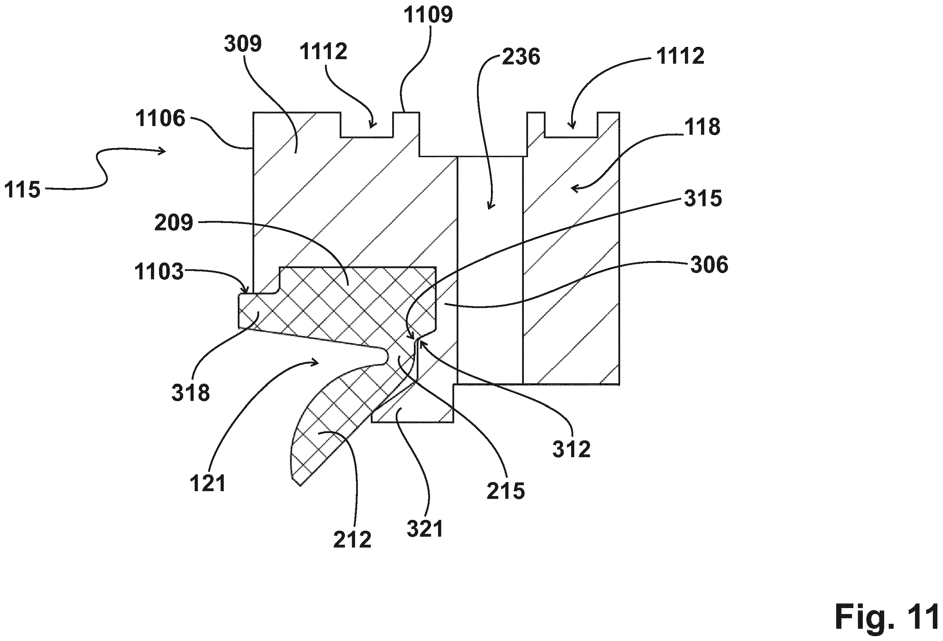

Fig. 11 zeigt in einer Schnittansicht eine Weiterbildung der anhand Fig. 3 erläuterten Ausführungsbeispiels einer Dichtungseinheit 115, wobei sich bei dem Ausführungsbeispiel gemäß Fig. 3 und der Weiterbildung gemäß Fig. 11 zum Vermeiden von Wiederholungen einander entsprechende Elemente mit den gleichen Bezugszeichen versehen und im Weiteren nicht näher erläutert sind. Bei der Weiterbildung gemäß Fig. 11 ist der Dichtungsring 121 mit einem Abschlussring 318 ausgebildet, der im relaxierten Zustand des Dichtungsrings 121 mit einem Überstand 1103 über eine axial nach außen weisende Stirnseite 1106 der Deckwand 309 übersteht. Die Dimension des Überstands 1103 in axialer Richtung ist dabei in Abhängigkeit der Elastizität des Dichtungsrings 121 im Fixierbereich 209 so eingerichtet, dass der jeweilige Abschlussring 118 in verbauter Anordnung der Dichtungseinheiten 115 bündig mit der Stirnseite 1106 abschließt, ohne den Formschluss des Fixierbereichs 209 mit der Deckwand 309 funktional zu beeinträchtigen. Durch das Ausbilden des Überstands 1103 lassen sich somit benachbarte Dichtungsringhalter 118 in radialer Richtung gegeneinander abdichten.

Weiterhin verfügt der Dichtungsringhalter 118 an seiner nach radial außen weisenden Deckseite 1109 über eine Anzahl von Außendichtungsaufnahmenuten 1112, in die in Fig. 11 nicht dargestellte Außendichtungen 206 zum Abdichten des Dichtungsringhalters 118 gegen den in Fig. 11 nicht dargestellten Dichtungsträger 112 einfügbar sind.

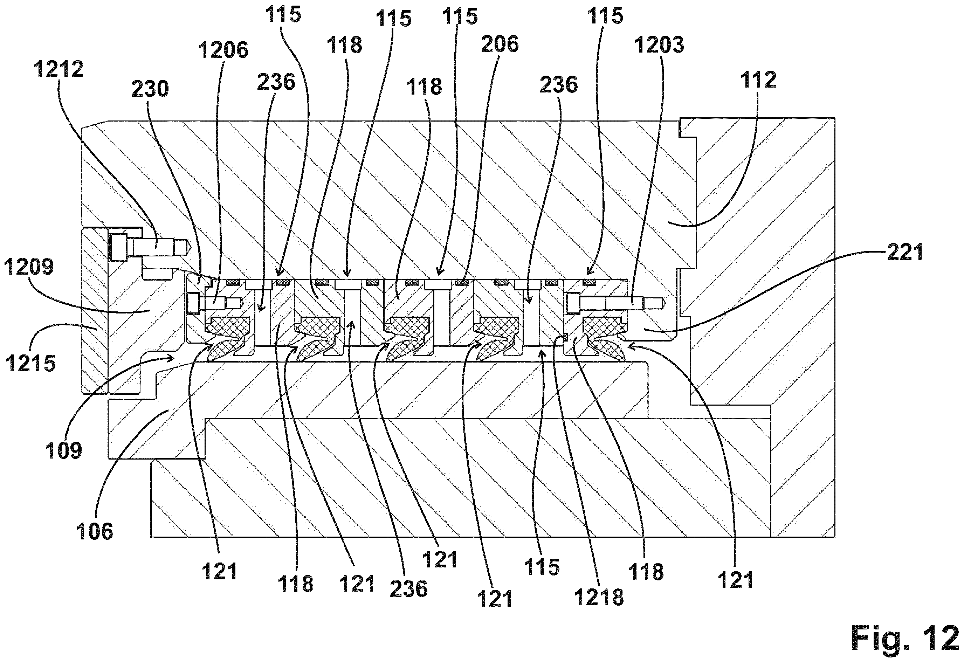

Fig. 12 zeigt in einer Schnittansicht entsprechend der Darstellung gemäß Fig. 2 eine Anzahl von Dichtungseinheiten 115 gemäß der anhand Fig. 11 erläuterten Weiterbildung in einer verbauten Anordnung, wobei sich zum Vermeiden von Wiederholungen bei der Darstellung gemäß Fig. 2 und der Darstellung gemäß Fig. 12 einander entsprechende Elemente mit den gleichen Bezugszeichen versehen und zum Teil im Weiteren nicht nochmals näher erläutert sind. Aus der Darstellung gemäß Fig. 12 ist ersichtlich, dass die Dichtungseinheiten 115 über eine Anzahl von Einzelringbefestigungsschrauben 1203 mit dem Dichtungsringträger 112 für die in der Darstellung gemäß Fig. 12 rechts angeordnete, axial innenseitige Dichtungseinheit 115 beziehungsweise mit der jeweils axial innenseitigeren benachbarten Dichtungseinheit 115 für axial außenseitiger liegende Dichtungseinheiten 115 verbunden sind. Die in axialer Richtung ganz außenseitige Dichtungseinheit 115 ist mittels Abschlussschrauben 1206 lösbar mit einem gegenüber dem Klemmring 230 gemäß Fig. 2 in radialer Richtung kleiner dimensionierten Klemmring 230 verbunden, an den sich ein die Öffnung zwischen dem Dichtungsringträger 112 und dem Dichtungslaufring 106 im axial außenseitigen Bereich im Wesentlichen vollständig überdeckender Abschlussring 1209 anschließt.

Der Abschlussring 1209 ist mit dem Dichtungsringträger 112 mittels Abschlussringbefestigungsschrauben 1212 mit dem Dichtungsträger 112 verbunden, so dass die Dichtungseinheiten 115 nochmals im Verbund fixiert sind. Der Abschlussring 1209 ist selbst zum Schutz axial außenseitig durch einen Abdeckring 1215 abdeckt.

Aus Fig. 12 ist weiterhin ersichtlich, dass die an den Anschlagring 221 angrenzende Dichtungseinheit 115 mittels eines in dem Dichtungsringhalter 118 angeordneten Radialranddichtring 1218 eine radiale Abdichtung zu der benachbarten Dichtungseinheit 115 schafft.

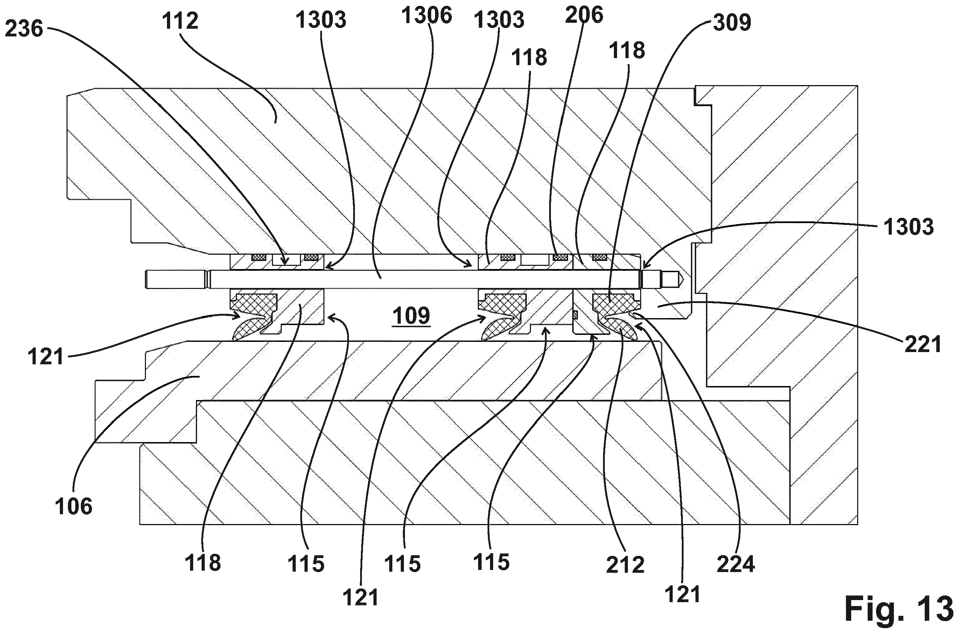

Fig. 13 zeigt in einer Schnittansicht entsprechend Fig. 12 eine Anzahl von Dichtungseinheiten 115 in einer abgewandelten Weiterbildung gemäß Fig. 11, wobei sich zum Vermeiden von Wiederholungen in der Darstellung gemäß Fig. 12 und in der Darstellung gemäß Fig. 13 einander entsprechende Elemente mit den gleichen Bezugszeichen versehen und im Weiteren zum Teil nicht nochmals näher erläutert sind. Bei der Ausgestaltung gemäß Fig. 13 sind in den Dichtungsringhaltern 118 sich in axialer Richtung erstreckende erste Durchgangsausnehmungen 1303 ausgebildet, die den jeweiligen Dichtungsringhalter 118 queren. Weiterhin lässt sich der Darstellung gemäß Fig. 13 entnehmen, dass eine Anzahl von Blockmontagebolzen 1306 vorhanden sind, die mit einem Ende in den Anschlagring 221 eingeschraubt sind und die sich von dem Anschlagring 221 wegweisend in axialer Richtung erstrecken.

Wie aus Fig. 13 ersichtlich ist, lassen sich die Dichtungseinheiten 115 axial außenseitig auf die Blockmontagebolzen 1306 aufstecken und bis zum Anschlag an den Anschlagring 221 beziehungsweise an die axial innenseitiger liegende Dichtungseinheit 115 aufschieben. Bei ausreichend groß dimensionierten Blockmontagebolzen 1306 lassen sich die Dichtungseinheiten 115 somit ohne Einzelverschraubungen untereinander fixieren.

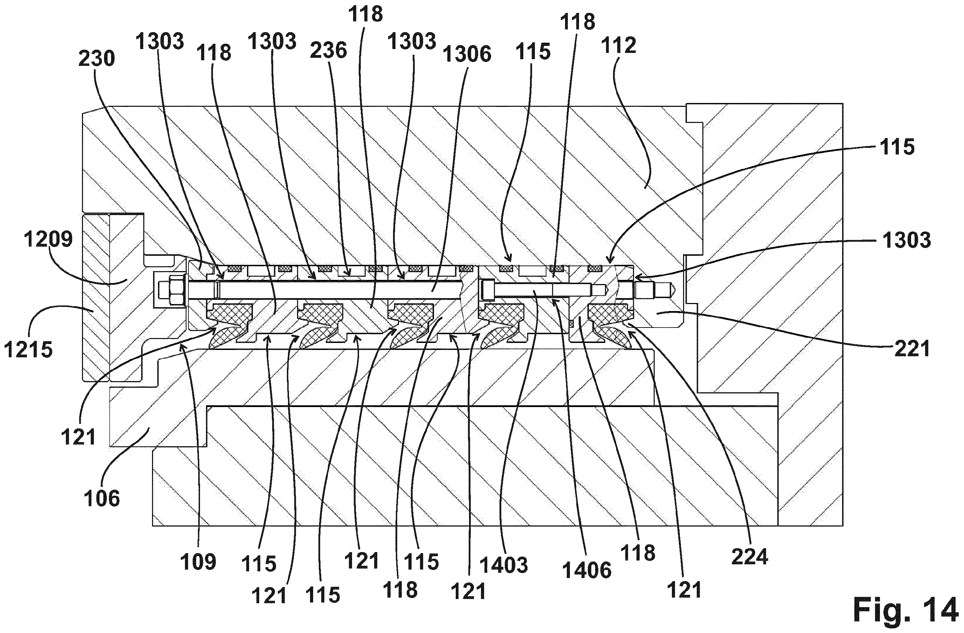

Fig. 14 zeigt in einer Schnittansicht entsprechend Fig. 12 und Fig. 13 eine Weiterbildung der Ausgestaltung gemäß Fig. 13, wobei zum Vermeiden von Wiederholungen in den Darstellungen gemäß Fig. 13 und Fig. 14 einander entsprechende Elemente mit den gleichen Bezugszeichen versehen und zum Teil nicht nochmals näher erläutert sind. Aus der Darstellung gemäß Fig. 14 ist ersichtlich, dass gegenüber der Ausgestaltung gemäß Fig. 13 zum Erhöhen der Stabilität des Verbunds an Dichtungseinheiten 115 zusätzlich zu den Blockmontagebolzen 1306 Einzelmontagebolzen 1403 vorhanden sind, die sich durch in den Dichtungsringhaltern 118 ausgebildete zweite Durchgangsausnehmungen 1406, die gegenüber den ersten Durchgangsausnehmungen 1303 für die Blockmontagebolzen 1306 in Umfangsrichtung versetzt liegen, erstrecken und mit denen in axialer Richtung benachbarte Dichtungsringhalter 118 verschraubbar sind, um dadurch zum Erhöhen der Stabilität des Verbunds an Dichtungseinheiten 115 benachbarte Dichtungsringhalter 118 auch paarweise direkt miteinander zu verbinden.

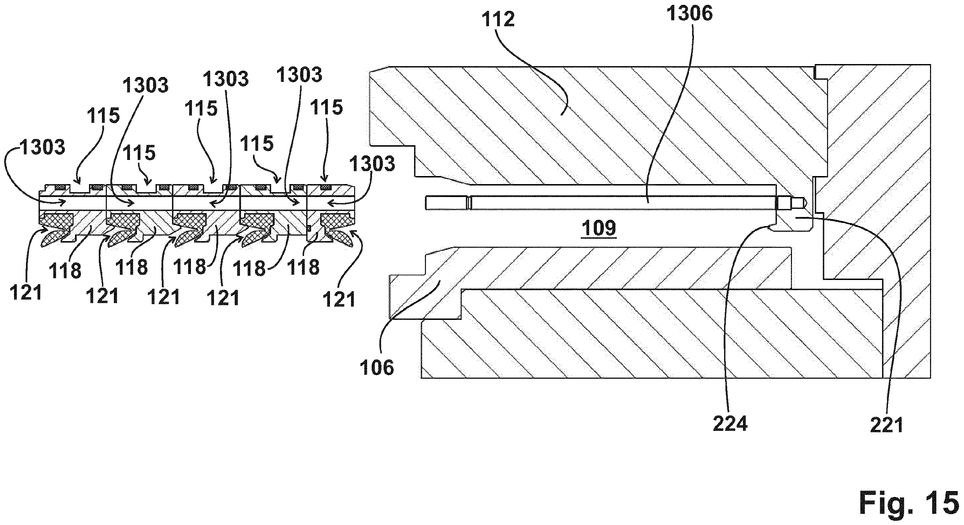

Fig. 15 zeigt in einer Schnittansicht die anhand Fig. 14 erläuterte Ausgestaltung von Dichtungseinheiten 115 mit den zwei Sätzen von Durchgangsausnehmungen 1303, 1406 mit den Dichtungseinheiten 115 in einer Vormontageanordnung, bei der die Dichtungseinheiten 115 bereits über die in Fig. 15 nicht dargestellten Einzelmontagebolzen 1403 einen Montageblock bildend miteinander verschraubt und zum Aufschieben auf die Blockmontagebolzen 1306 vorbereitet sind. Dadurch ergibt sich eine besonders effiziente Vormontage der Dichtungseinheiten 115 außerhalb des zwischen dem Dichtungslaufring 106 und dem Dichtungsträger 112 ausgebildeten Ringspalts 109.

Bei zweckmäßigen Ausführungen von Tunnelbohrmaschinen gemäß der Erfindung sind ringartig ausgebildete Dichtheitsprüfwerkzeuge vorgesehen, die nachfolgend näher erläutert sind.

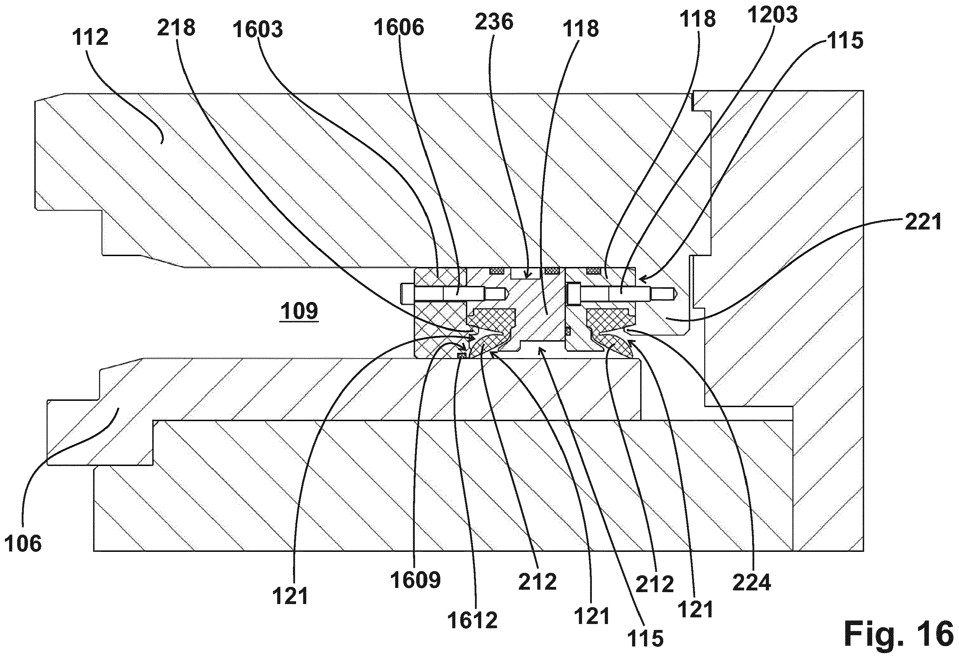

Fig. 16 zeigt in einer Schnittansicht entsprechend Fig. 11 als Ausführungsbeispiel eines Dichtheitsprüfwerkzeugs ein ringartig ausgebildetes Niederhalterwerkzeug 1603, das in dem Ringspalt 109 angeordnet und mittels Werkzeugbefestigungsschrauben 1606 zur Dichtheitsprüfung mit einem axial außenseitig liegenden Dichtungsringhalter 118 verschraubt ist.

Die der Dichtungseinheit 115 zugewandte Stirnseite des Niederhalterwerkzeugs 1603 ist dabei im Bereich des Fixierbereichs 209 des Dichtungsrings 121 wie der entsprechende Bereich eines Dichtungsringhalters 118 mit einer Gegennase 218 ausgebildet, weist jedoch abweichend von einem derartigen Dichtungsringhalter 118 auf seiner an den Dichtungslaufring 106 angrenzenden Seite einen Dichtlippenanschlag 1609 auf, mit dem die an ihn angrenzende Dichtlippe 212 gegen Bewegung fixierbar ist. Weiterhin lässt sich Darstellung gemäß Fig. 16 entnehmen, dass im Bereich des Dichtlippenanschlags 1609 eine in axialer Richtung abdichtende Werkzeugdichtung 1612 vorhanden ist.

In der in Fig. 16 dargestellten Anordnung lässt sich durch Beaufschlagen der in der an das Niederhalterwerkzeug 1603 angrenzenden Dichtungseinheit 115 ausgebildeten Durchlassanordnung 236 mit einem unter Druck stehenden Fluid wie Druckluft der Öffnungsdruck der axial innenseitig angeordneten, mit dem Anschlagring 221 verbundenen Dichtungseinheit 115 überprüfen.

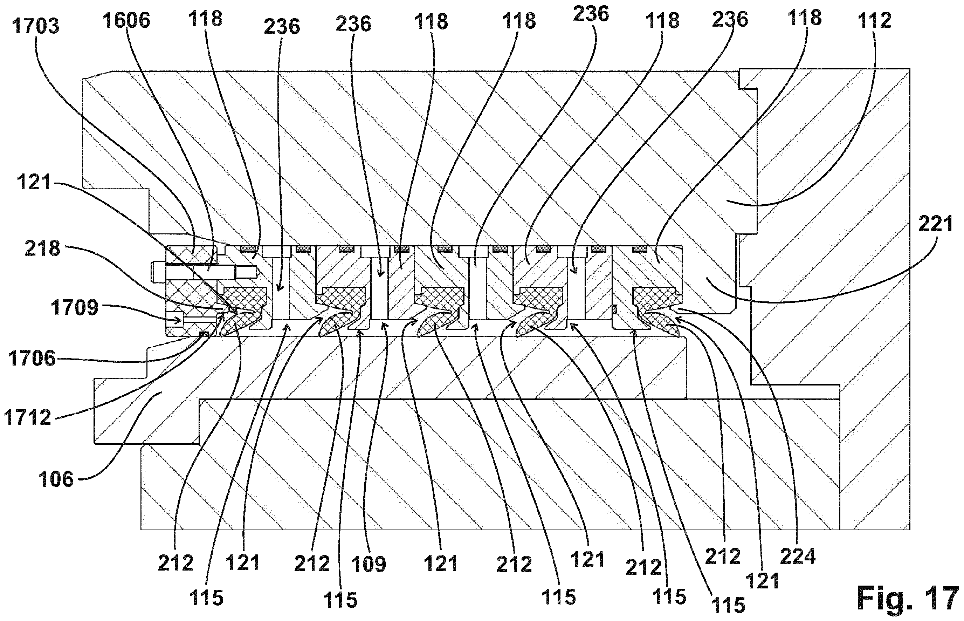

Fig. 17 zeigt in einer Schnittansicht entsprechend Fig. 12 eine Anordnung von in dem Ringspalt 109 angeordneten Dichtungseinheiten 115 mit einem Abdrückwerkzeug 1703 als weiterem ringartig ausgebildeten Dichtheitsprüfwerkzeug. Das Abdrückwerkzeug 1703 ist wie das Niederhalterwerkzeug 1603 mit Werkzeugbefestigungsschrauben 1606 an einem axial außenseitig liegenden Dichtungsringhalter 118 einer Dichtungseinheit 115 verschraubt und im Bereich des Fixierbereichs 318 des Dichtungsrings 121 zum Hintergreifen des Fixierbereichs 318 mit einer Gegennase 218 eingerichtet.

Abweichend von dem Niederhalterwerkzeug 1603 ist der an den Dichtungslaufring 106 angrenzende Bereich des Abdrückwerkzeugs 1703 in axialer Richtung jedoch von dem freien Ende der ihm benachbarten Dichtlippe 212 beanstandet, so dass diese Dichtlippe 212 bis zu einem gewissen Grad beweglich ist. Auch das Abdrückwerkzeug 1703 ist über eine an den Dichtungslaufring 106 angrenzende Abdrückwerkzeugdichtung 1706 in axialer Richtung abgedichtet.

Das Abdrückwerkzeug 1703 ist mit einer Druckeinlassöffnung 1709 ausgebildet, die sich in axialer Richtung durch das Abdrückwerkzeug 1703 erstreckt und über die ein unter Druck stehendes Fluid in den zwischen dem axial innenseitig angeordneten Dichtungsring 121 sowie dem Abdrückwerkzeug 1703 ausgebildeten Prüfringraum 1712 einspeisbar ist. Dadurch ist der Schließdruck, auch Funktionsdruck genannt, des dem Abdrückwerkzeug 1703 benachbarten Dichtungsrings 121 überprüfbar.

Da zudem jede Dichtungseinheit 115 mit einer Durchlassanordnung 236 ausgebildet ist, lassen sich mit einem axial außen an der zuletzt verbauten oder an der axial ganz außenseitig und damit endseitig verbauten Dichtungseinheit 115 angeordneten Abdrückwerkzeug 1703 verschiedene Druckkonstellationen dahingehend überprüfen, ob die geforderten Schließdrücke und Öffnungsdrücke der zuletzt verbauten Dichtungseinheit 115 oder des bereits verbauten Verbunds an Dichtungseinheiten 115 eingehalten werden.

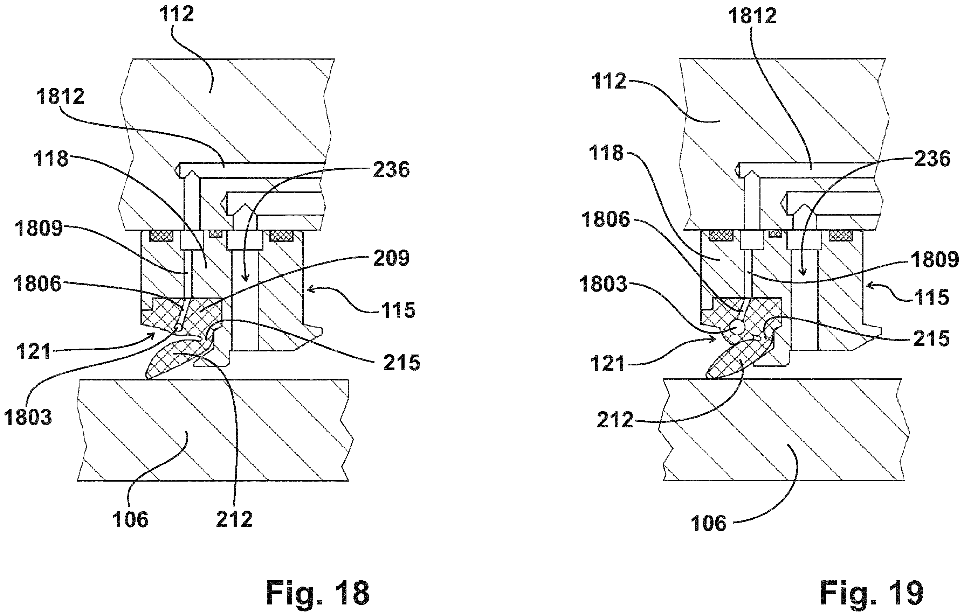

Fig. 18 zeigt in einer Schnittansicht eine Weiterbildung einer Dichtungseinheit 115, bei der der Dichtungsring 121 in seinem Fixierbereich 209, zweckmäßigerweise mit einer verhältnismäßig geringen Restmaterialstärke im der Dichtlippe 212 gegenüberliegenden Bereich mit einer sich in Umfangsrichtung erstreckenden Ringhohlkammer 1803 ausgebildet ist. Die Ringhohlkammer 1803 steht über einer Anzahl von Verbindungskanälen 1806 fluiddynamisch mit einer Außenseite des Fixierbereichs 209 in Verbindung. An die Verbindungskanäle 1806 schließen sich in dem Dichtungsringhalter 118 ausgebildete Durchleitkanäle 1809 an, die wiederum mit in dem Dichtungsträger 112 ausgebildeten Fluidkanälen 1812 in Verbindung stehen.

Der fluidmechanische Verbund von Ringhohlkammer 1803, Verbindungskanälen 1806, Durchleitkanälen 1809 und Fluidkanälen 1812 einer beziehungsweise für eine Dichtungseinheit 115 sind für ein Beeinflussen des Bewegungsverhaltens der betreffenden Dichtlippe 212 beziehungsweise der Stellung der Dichtlippe 212 mit einem Fluid, zweckmäßigerweise mit einer inkompressiblen beziehungsweise im Wesentlichen inkompressiblen Flüssigkeit, gefüllt.

Fig. 18 zeigt das vorgenannte fluidmechanische System in einer drucklosen Anordnung, bei der die Ringhohlkammer 1803 ein relativ kleines Ruhevolumen aufweist.

Fig. 19 zeigt die Anordnung gemäß Fig. 18 mit dem unter Druck gesetzten fluidmechanischen Verbund aus Ringhohlkammer 1803, Verbindungskanälen 1806, Durchleitkanälen 1809 und Fluidkanälen 1812, bei dem das Volumen der Ringhohlkammer 1803 gegenüber dem in Fig. 18 dargestellten Ruhevolumen als Arbeitsvolumen derart vergrößert ist, dass der der Dichtlippe 212 gegenüberliegende Bereich des Fixierbereichs 209 gegen die Dichtlippe 212 vorstehend vorgewölbt ist und in der Darstellung gemäß Fig. 19 an der Dichtlippe 212 anliegt.

In Abhängigkeit der in dem vorgenannten Verbund herrschenden Drücke lässt sich somit eine Überprüfung des Schließdrucks beziehungsweise des Öffnungsdrucks durchführen.

Des Weiteren lässt sich bei Beaufschlagen mit einem entsprechenden Druck in dem vorgenannten Verbund die Dichtlippe 212 zur Entlastung des Gelenkbereichs 215 begrenzen oder inhibieren.

## Patentansprüche

1. Tunnelbohrmaschine mit einer Antriebswelle (103) für ein Schneidrad, die unter Ausbilden eines Ringspalts (109) von einem Dichtungslaufring (106) und von einem in einem radialen Abstand von dem Dichtungslaufring (106) angeordneten Dichtungsträgers (112) umgeben ist, und mit einer Anzahl von Dichtungseinheiten (115), die in dem Ringspalt (109) in axialer Richtung hintereinander abdichtend angeordnet sind, wobei Dichtungseinheiten (115) mit einem Dichtungsringhalter (118) aus einem biegesteifen Material, der zumindest in einem Aufnahmebereich U-artig mit zwei einander gegenüber liegenden Seitenwänden (303, 306; 703, 706; 903, 906) und mit einer sich zwischen radial außenseitigen Enden der Seitenwände (303, 306; 703, 706; 903, 906) erstreckenden, radial außenseitigen Deckwand (309; 709; 803, 806; 909) ausgebildet ist, und mit einem Dichtungsring (121) aus einem biegeelastischen Material, der einen Fixierbereich (209) und wenigstens eine Dichtlippe (212) aufweist, wobei der Fixierbereich (209) von den Seitenwänden (303, 306; 703, 706; 903, 906) und von der Deckwand (309; 709; 803, 806; 909) des Dichtungsringhalters (118) umschlossen ist, so dass jede dieser Dichtungseinheiten (115) ohne Gefahr eines Verkippens des Dichtungsrings in den Ringspalt (109) einführbar ist, wobei der Kraftfluss über die in axialer Richtung aneinander anliegenden Dichtungsringhalter (118) erfolgt, so dass aufgrund der weitgehend frei von Reibungsverlusten erfolgenden Verschiebbarkeit der Dichtungsringhalter (118) in axialer Richtung eine gleichmäßige Verteilung der Vorspannkräfte über die Dichtungsringhalter (118) erfolgt und jeder Dichtungsringhalter (118) die auf den von ihm gehaltenen Dichtungsring (121) ausgeübten Belastungen aufnimmt, so dass die Dichtungsringe (121) in ihrem Fixierbereich (209) verhältnismäßig wenig belastet sind.

2. Tunnelbohrmaschine nach Anspruch 1, **dadurch gekennzeichnet, dass** der Dichtungsringhalter (118) und der Fixierbereich (209) wechselweise formschlüssig ineinandergreifende Strukturen (312, 315; 318; 403; 603) aufweisen.

3. Tunnelbohrmaschine nach Anspruch 1 oder Anspruch 2, **dadurch gekennzeichnet, dass** der oder jeder Dichtungsring (121) in einer relaxierten Anordnung in axialer Richtung einen Überstand (1103) gegenüber einer Stirnseite (1106) des ihn haltenden Dichtungsringhalters (118) aufweist.

4. Tunnelbohrmaschine nach einem der Ansprüche 1 bis 3, **dadurch gekennzeichnet, dass** der oder jeder Dichtungsring (121) eine Ringhohlkammer (1803) aufweist, die über wenigstens einen Verbindungskanal (1806) mit der Außenseite des Dichtungsrings (121) fluidmechanisch in Verbindung steht.

5. Tunnelbohrmaschine nach Anspruch 4, **dadurch gekennzeichnet, dass** der Dichtungsringhalter (118) einen Durchleitkanal (1809) aufweist, der sich durch den Dichtungsringhalter (118) erstreckt und mit dem Verbindungskanal (1806) fluidmechanisch in Verbindung steht.

6. Tunnelbohrmaschine nach einem der Ansprüche 1 bis 5, **dadurch gekennzeichnet, dass** der Dichtungsring (121) zwischen dem Fixierbereich (209) und der oder jeder Dichtlippe (212) einen Gelenkbereich (215) mit einer gegenüber der Dichtlippe (212) verringerten Materialdicke aufweist.

7. Tunnelbohrmaschine nach einem der Ansprüche 1 bis 6, **dadurch gekennzeichnet, dass** der Fixierbereich (209) mit einer Vorspannung in dem Dichtungsringhalter (118) angeordnet ist.

8. Tunnelbohrmaschine nach einem der Ansprüche 1 bis 7, **dadurch gekennzeichnet, dass** die Seitenwände (903, 906) von der Deckwand (909) wegweisend zueinander geneigt sind.

9. Tunnelbohrmaschine nach einem der Ansprüche 1 bis 8, **dadurch gekennzeichnet, dass** der Dichtungsringhalter (118) zweiteilig mit einem ersten Dichtungsringhalterteil (803; 912) sowie mit einem zweiten Dichtungsringhalterteil (806; 915) aufgebaut ist und dass die Dichtungsringhalterteile (803, 806; 912, 915) über Verbindungsmittel (809, 918) lösbar miteinander verbindbar sind.

10. Tunnelbohrmaschine nach Anspruch 9, **dadurch gekennzeichnet, dass** die Verbindungsmittel Schraubverbindungen (809) umfassen.

11. Tunnelbohrmaschine nach Anspruch 9 oder Anspruch 10, **dadurch gekennzeichnet, dass** die Verbindungsmittel wenigstens eine Rastverbindung (918) umfassen.

12. Tunnelbohrmaschine nach einem der Ansprüche 1 bis 11, **dadurch gekennzeichnet, dass** in den Dichtungsringhaltern (118) eine Durchlassanordnung (236) ausgebildet ist, die dazu eingerichtet ist, in Abhängigkeit ihrer Position nach Abschluss des Montagevorgangs eine Kammer mit zugeführtem Fett, Öl oder entsprechenden Medien zu versorgen beziehungsweise ein unter Druck stehendes Fluid zum Durchführen von Druckprüfungen zuzuführen.

13. Tunnelbohrmaschine nach einem der Ansprüche 1 bis 12, **dadurch gekennzeichnet, dass** eine Anzahl von Blockmontagebolzen (1306) und/oder Einzelmontagebolzen (1403) vorhanden ist, über die eine Anzahl von Dichtungseinheiten (115) blockweise und/oder einzeln montierbar sind.

14. Tunnelbohrmaschine nach einem der Ansprüche 1 bis 13, **dadurch gekennzeichnet, dass** wenigstens ein ringartiges Dichtheitsprüfwerkzeug (1603, 1703) vorhanden ist, das mit einer axial außenseitig angeordneten Dichtungseinheit (115) druckdicht in Verbindung bringbar ist.

15. Tunnelbohrmaschine nach einem der Ansprüche 1 bis 14, **dadurch gekennzeichnet, dass** an einem Einführende des Ringspalts (109) eine keilartig ausgebildete Zentrierhilfe (1003) angeordnet ist.

## Claims

1. Tunnel boring machine having a drive shaft (103) for a cutting wheel, said drive shaft being enclosed through formation of an annular gap (109) of a sealing ring (106) and a seal carrier assembly (112) arranged at a radial distance from the seal ball race (106), and having a plurality of seal units (115), being arranged behind each other sealingly in the annular gap (109) in the axial direction, wherein seal units (115) with a seal ring retainer (118) of a rigid material, such seal ring retainer being formed at least in one receiving area in a U-shape with two opposing side walls (303, 306; 703, 706; 903, 906) and with a radially external top wall (309; 709; 803, 806; 909) extending between radially external ends of the side walls (303, 306; 703, 706; 903, 906), and having a seal ring (121) of a flexible material, said seal ring having a fastening area (209) and at least one seal lip (212), wherein the fastening area (209) is enclosed by the side walls (303, 306; 703, 706; 903, 906) and by the top wall (309; 709; 803, 806; 909) of the seal ring retainer (118), such that each of these seal units (115) can be inserted into the annular gap (109) without risk of the seal ring tilting, wherein the flow of forces takes place through the seal ring retainers (118) juxtaposed in the axial direction, such that an equal distribution of the prestress forces takes place through the seal ring retainers (118) due to the resulting and largely free of friction losses relocatability of the seal ring retainers (118) in the axial direction and each seal ring retainer (118) absorbs the loads exerted on the seal ring (121) retained therein, such that the seal rings (121) are put under relatively less load in their fastening area (209).

2. Tunnel boring machine according to Claim 1, **characterised in that** the seal ring retainer (118) and the fastening area (209) have mutually interlocking structures (312, 315; 318; 403; 603).

3. Tunnel boring machine according to Claim 1 or Claim 2, **characterised in that** the or each seal ring (121) has a protrusion (1103) in a relaxed arrangement in the axial direction beyond an end face (1106) of the seal ring retainer (118) in which the seal ring is retained.

4. Tunnel boring machine according to Claims 1 to 3, **characterised in that** the or each seal ring (121) has a ring-shaped hollow chamber (1803), which is connected to the outside of the seal ring (121) through at least one connecting channel (1806) by means of fluid mechanics.

5. Tunnel boring machine according to Claim 4, **characterised in that** the seal ring retainer (118) has a flow channel (1809), which extends through the seal ring retainer (118) and connects to the connecting channel (1806) by means of fluid mechanics.

6. Tunnel boring machine according to Claims 1 to 5, **characterised in that** the seal ring (121) has a joint area (215) of a less material thickness than the seal lip (212) between the fastening area (209) and the or each seal lip (212).

7. Tunnel boring machine according to Claims 1 to 6, **characterised in that** the fastening area (209) is arranged with a prestress in the seal ring retainer (118) .

8. Tunnel boring machine according to Claims 1 to 7, **characterised in that** the side walls (903, 906) are inclined away from the top wall (909) towards each other.

9. Tunnel boring machine according to Claims 1 to 8, **characterised in that** the seal ring retainer (118) is formed in two portions with a first seal ring retainer portion (803; 912) and with a second seal ring retainer portion (806; 915) and that the seal ring retainer portions (803, 806; 912, 915) can be releasably connected by means of fasteners (809, 918).

10. Tunnel boring machine according to Claim 9, **characterised in that** the fasteners comprise screw connections (809).

11. Tunnel boring machine according to Claim 9 or Claim 10, **characterised in that** the fasteners comprise at least one snap connection (918).

12. Tunnel boring machine according to Claims 1 to 11, **characterised in that** a diffuser arrangement (236) is formed in the seal ring retainers (118), which is configured, depending on its position on completion of the assembly process, to provide a chamber with supplied grease, oil, or corresponding media, to supply a pressurised fluid in order to conduct pressure tests, respectively.

13. Tunnel boring machine according to Claims 1 to 12, **characterised in that** a plurality of block mounting bolts (1306) and/or single mounting bolts (1403) are present, by which a plurality of seal units (115) can be mounted in block and/or singly.

14. Tunnel boring machine according to Claims 1 to 13, **characterised in that** at least one ring-shaped leak testing tool (1603, 1703) is present, which can be brought into pressure-tight connection with an axially externally arranged seal unit (115).

15. Tunnel boring machine according to Claims 1 to 14, **characterised in that** a wedge-shaped centring guide (1003) is arranged on one insert end of the annular gap (109).

## Revendications

1. Tunnelier avec un arbre d'entraînement (103) pour une roue de coupe, entourée d'une bague d'étanchéité (106) et d'un support de joint (112) disposé à une distance radiale de la bague d'étanchéité (106) en formant un interstice annulaire (109), et avec un certain nombre d'unités d'étanchéité (115) disposées de manière étanche les unes derrière les autres dans la direction axiale dans l'interstice annulaire (109), les unités d'étanchéité (115) étant munies d'un support de bague d'étanchéité (118) conçu à partir d'un matériau résistant à la flexion, au moins dans une zone de réception, en forme de U avec deux parois latérales opposées (303, 306 ; 703, 706 ; 903, 906) et avec une paroi de recouvrement (309 ; 709 ; 803, 806, 906) radialement extérieure s'étendant entre les extrémités radialement extérieures des parois latérales (303, 306 ; 703, 706 ; 903, 906), et avec une bague d'étanchéité (121) conçue à partir d'un matériau élastique à la flexion, qui présente une zone de fixation (209) et au moins une lèvre d'étanchéité (212), la zone de fixation (209) étant séparée des parois latérales (303, 306 ; 703, 706 ; 903, 906) et de la paroi supérieure (309 ; 709 ; 803, 806 ; 909) du support de bague d'étanchéité (118), de sorte que chacune de ces unités d'étanchéité (115) peut être introduite dans l'interstice annulaire (109) sans risque de basculement de la bague d'étanchéité, le flux de force s'effectuant par l'intermédiaire des supports de bague d'étanchéité (118) appliqués l'un contre l'autre dans le sens axial, de sorte qu'en raison de la possibilité de déplacement des supports de bague d'étanchéité (118) dans la direction axiale, qui s'effectue dans une large mesure sans pertes par frottement, il se produit une répartition uniforme des forces de précontrainte sur les supports de bague d'étanchéité (118) et chaque support de bague d'étanchéité (118) absorbe les charges exercées sur la bague d'étanchéité (121) qu'il maintient, de sorte que les bagues d'étanchéité (121) sont relativement peu chargées dans leur zone de fixation (209).

2. Tunnelier selon la revendication 1, **caractérisé en ce que** le support de bague d'étanchéité (118) et la zone de fixation (209) présentent des structures (312, 315 ; 318 ; 403 ; 603) s'engageant mutuellement en alternance par complémentarité de forme.

3. Tunnelier selon la revendication 1 ou la revendication 2, **caractérisé en ce que** la bague d'étanchéité (121) ou chacune de celles-ci présente, dans une disposition relaxée, une saillie (1103) dans la direction axiale par rapport à une face frontale (1106) du support de bague d'étanchéité (118) qui la maintient.

4. Tunnelier selon l'une quelconque des revendications 1 à 3, **caractérisé en ce que** la bague d'étanchéité (121) ou chacune de celles-ci comprend une chambre annulaire creuse (1803) en communication fluidique avec l'extérieur de la bague d'étanchéité (121) par au moins un canal de jonction (1806).

5. Tunnelier selon la revendication 4, **caractérisé en ce que** le support de bague d'étanchéité (118) présente un canal de passage (1809) qui s'étend à travers le support de bague d'étanchéité (118) et est en communication fluidique avec le canal de jonction (1806).

6. Tunnelier selon l'une quelconque des revendications 1 à 5, **caractérisé en ce que** la bague d'étanchéité (121) comporte, entre la zone de fixation (209) et la lèvre d'étanchéité (212) ou chacune de celles-ci, une zone d'articulation (215) présentant une épaisseur de matériau réduite par rapport à la lèvre d'étanchéité (212).

7. Tunnelier selon l'une des revendications 1 à 6, **caractérisé en ce que** la zone de fixation (209) est disposée avec une précontrainte dans le support de bague d'étanchéité (118).

8. Tunnelier selon l'une des revendications 1 à 7, **caractérisée en ce que** les parois latérales (903, 906) sont inclinées l'une vers l'autre en s'éloignant de la paroi supérieure (909).

9. Tunnelier selon l'une quelconque des revendications 1 à 8, **caractérisé en ce que** le support de bague d'étanchéité (118) est conçu en deux parties, avec une première partie de support de bague d'étanchéité (803 ; 912) ainsi qu'avec une deuxième partie de support de bague d'étanchéité (806 ; 915) et **en ce que** les parties de support de bague d'étanchéité (803, 806 ; 912, 915) peuvent être reliées entre elles de manière amovible par des moyens de liaison (809, 918).

10. Tunnelier selon la revendication 9, **caractérisé en ce que** les moyens de liaison comprennent des raccords à vis (809).

11. Tunnelier selon la revendication 9 ou la revendication 10, **caractérisé en ce que** les moyens de liaison comprennent au moins une liaison par encliquetage (918).

12. Tunnelier selon l'une quelconque des revendications 1 à 11, **caractérisé en ce qu'**un agencement de passage (236) est formé dans les supports de bague d'étanchéité (118), lequel est adapté pour alimenter, en fonction de sa position après la fin de l'opération de montage, une chambre avec de la graisse, de l'huile ou des fluides correspondants amenés, respectivement pour amener un fluide sous pression afin d'effectuer des tests de pression.

13. Tunnelier selon l'une des revendications 1 à 12, **caractérisé en ce qu'**il existe un certain nombre de boulons de montage en bloc (1306) et/ou de boulons de montage individuels (1403), par l'intermédiaire desquels un certain nombre d'unités d'étanchéité (115) peuvent être montées en bloc et/ou individuellement.

14. Tunnelier selon l'une quelconque des revendications 1 à 13, **caractérisé en ce qu'**il est prévu au moins un outil de contrôle d'étanchéité (1603, 1703) de type annulaire, qui peut être mis en liaison de manière étanche à la pression avec une unité d'étanchéité (115) disposée axialement du côté extérieur.

15. Tunnelier selon l'une des revendications 1 à 14, **caractérisé en ce qu'**un auxiliaire de centrage (1003) de forme cunéiforme est disposé à une extrémité d'introduction de l'interstice annulaire (109).
